# EUROPEAN PATENT SPECIFICATION

(11) **EP 2 546 835 B1**
(45) Date of publication and mention of the grant of the patent: **19.12.2018**
(21) Application number: 11753010.5
(22) Date of filing: 03.03.2011
(51) Int. Cl.: G11B 27/34

(54) **DISC REPRODUCTION DEVICE**
SCHEIBENWIEDERGABEVORRICHTUNG
DISPOSITIF DE REPRODUCTION DE DISQUE

(30) Priority: 10.03.2010 JP 2010052702; 10.03.2010 JP 2010052703; 10.03.2010 JP 2010052701
(43) Date of publication of application: 16.01.2013
(60) Divisional application: 16166233.3
(73) Proprietor: Panasonic Intellectual Property Management Co., Ltd., Osaka-shi, Osaka 540-6207 (JP)
(72) Inventor: HIRAMATSU, Yoshinori, Osaka 540-6207 (JP); ITAGAKI, Taketo, Osaka 540-6207 (JP); KAWASHIMA, Osamu, Osaka 540-6207 (JP)
(74) Representative: Grünecker Patent- und Rechtsanwälte PartG mbB
(86) International application number: PCT/JP2011/001256
(87) International publication number: WO 2011/111344

(56) References cited:
- WO-A1-2008/139993
- JP-A- 2004 304 767
- JP-A- 2006 244 106
- JP-A- 2006 294 139
- JP-A- 2007 122 765
- JP-A- 2007 509 519
- US-A1- 2010 107 102

## Description

The present invention relates to a disc reproduction apparatus which reproduces data recorded in a recording medium such as a BD-ROM.

Recently, a disc reproduction apparatus has become widespread in household-use for a large capacity disc having stored high-definition and high-sound-quality information with an advanced interactive function.

A representative disc reproduction apparatus among them is a Blu-ray Disc (hereinafter referred to as a "BD") apparatus. A BD is provided with a huge data capacity: 25 gigabytes (GB) in a single layer and 50 GB in a dual layer, and can store high definition movie content. Commercially available or rental-use packaged software using the BD is supplied as a BD-ROM (Blue-ray-Read-Only-Memory) that is a read-only media in which data is written in the course of manufacture and which is not recordable and not rewritable.

For the BD-ROM, two modes of specifications have been developed: High Definition Movie (HDMV) mode and Blu-Ray Disc Java (BD-J) mode. In the HDMV mode, codec specification for video and sound is extended from a conventional Digital Versatile Disc Read Only Memory (DVD-ROM), and high definition video and high quality audio are available. It is noted that content specification of a BD-ROM is similar to that of a DVD-ROM. In the BD-J mode, in addition to the HDMV mode, visual representation such as a superimposed video can be added by a Java (registered trademark) application.

In the case of a conventional DVD, when a menu is called during reproduction of the main part, the reproduction is interrupted, and a menu screen is displayed on the whole screen. A "pop-up menu" adopted by a BD does not interrupt reproduction of the main part and a translucent menu screen appears in a "pop-up manner" over the reproduction screen.

Most of HDMV mode titles are provided with such a pop-up menu. In the pop-up menu, there are provided functions such as move to top menu, transition to reproduction position, and change in voice/subtitle stream.

In BD-J mode titles, a graphics menu in almost the same form as that of the pop-up menu of HDMV titles when it is displayed on the screen has been realized by a BD-J application, which is a Java (registered trademark) application. Hereinafter, the pop-up menu in the HDMV mode and the graphic menu in the BD-J mode displayed by the BD-J application are collectively referred to as a pop-up menu.

There are provided user interfaces, such as a reproduction button and a stop button, as part of functions of a disc reproduction apparatus. However, these are different from the pop-up menu described above. The pop-up menu is specific to HDMV-mode and BD-J mode titles of a BD-ROM; in other words, information about the pop-up menu is held in a disc such as a BD-ROM, and the pop-up menu has functions specific to each title.

Dedicated buttons for realizing the user interface and pop-up menu functions are provided on a remote controller or the like, and a user can display a menu by pressing the buttons (for example, see Patent Literature 1).
JP 2007 122765 A discloses a device which displays a title menu from a recording medium or a device menu by switching the display according to the selection of the user. Two selectable tabs displayed on the screen exist, one for title menu selection and one for apparatus menu selection. The tabs can be selected via a remote control button.

[Patent Literature 1] Japanese Patent Laid-Open 2004-304767

In conventional techniques, a user operates a remote controller or the like to display a user interface and a pop-up menu on a screen. However, since the pop-up menu has its displayed position and form predefined for each title, the user interface and the pop-up menu may be overlapped when they are displayed.

The user cannot determine only by seeing che screen whether a displayed menu is a user interface or a pop-up menu. Therefore, the user may be confused about which menu display on the screen the user should look at to perform an operation, and even the user may perform a wrong operation.

Especially, in the case of a car navigation system which is used in an in-vehicle environment, the possibility of performing a wrong operation is higher because it is operated mainly with a touch panel. That is, since a touch panel is operated by directly touching each button of a user interface and a pop-up menu displayed on a screen, an action which is not intended by the user may be invoked if a wrong button is pressed by mistake.

Since the pop-up menu is displayed being overlapped on a title reproduction screen, the user commonly performs a operation of displaying the pop-up menu in a state that only the title reproduction screen is displayed. In this case, since a remote controller is provided with the dedicated buttons for realizing the user interface and pop-up menu functions in conventional techniques, the user can press a button for the operation which the user desires.

However, in the case where the user operates a touch panel in the state that only the title reproduction screen is displayed, it is not possible to determine which menu the user wants to display by operating the screen of the touch panel, and the user interface and pop-up menu functions cannot be realized.

Furthermore, in the HDMV mode, it is possible to, when the user presses a button via the touch panel, execute the user's operation of the button on the basis of the coordinate information about the button and the pressed position. However, since the graphics menu in the BD-J mode is realized by the BD-J application, button position information does not exist unlike the HDMV mode, and the graphics menu does noL respond to a touch panel operation.

The present invention has been made to solve the conventional problems as described above. A first object of the present invention is to provide a disc reproduction apparatus capable of appropriately displaying a pop-up menu and a user interface specific to HDMV mode and BD-J mode titles to reduce operation mistakes.

A second object of the present invention is to provide a disc reproduction apparatus capable of, even when a user performs a operation via a touch panel during reproduction of a title, realizing pop-up menu and user interface functions without especially preparing pop-up menu and user interface operation buttons.

Furthermore, a third object of the present invention is to provide a disc reproduction apparatus capable of, even when a user performs a operation via a touch panel, enabling the user to operate the pop-up menu in the HDMV mode and the graphics menu in the BD-J mode similarly. The above problems are solved by the features of the independent claims.

Furthermore, a disc reproduction apparatus has a signal processing section accepting a user's operation onto a touch panel integrated with a monitor; and upon receiving a mouse event error from a BD-J application after a user's operation onto the touch panel is notified to the BD-J application as a mouse event, the signal processing section issues VK_POPUP_MENU to the BD-J application.

According to the first invention, it is possible to provide a disc reproduction apparatus capable of reducing operation mistakes because any of a pop-up menu and a user interface specific to HDMV mode and BD-J mode titles is displayed on a screen.

According to the invention, a pop-up menu and a user interface are displayed being given priority degrees when the user performs a operation on the touch panel during reproduction of a title. Therefore, it is possible to realize the functions of the pop-up menu and the user interface without especially preparing pop-up menu and user interface operation buttons.

Furthermore, since a mouse event of the BD-J application is used for operation of a graphics menu in the BD-J mode, it is possible to operate a pop-up menu and a graphics menu similarly even in the case of performing a operation via the touch panel.

[Figure 1] Figure 1 is a block diagram of a disc reproduction apparatus according to an embodiment of the present invention.
[Figure 2] Figure 2 is a diagram showing the configuration of a BD-ROM according to the embodiment of the present invention.
[Figure 3] Figure 3 is a diagram showing the relationships between an index.bdmv file and titles according to the embodiment of the present invention.
[Figure 4] Figure 4 is a diagram showing a system configuration using the disc reproduction apparatus according to the embodiment of the present invention.
[Figure 5A] Figure 5A is a diagram showing an example of a title reproduction screen according to the embodiment ot the present invention.
[Figure 5B] Figure 5B is a diagram showing a display example of a pop-up menu according to the embodiment of the present invention.
[Figure 6] Figure 6 is a diagram showing a process flow in the case of performing a operation using a remote controller in the embodiment of the present invention.
[Figure 7] Figure 7 is a diagram showing a process flow in the case of performing a operation using a touch panel in the embodiment, of the present invention.
[Figure 8] Figure 8 is a diagram showing a process flow in the case of operating the pop-up menu of a BD-J title using the touch panel in the embodiment of the present invention.
[Figure 9] Figure 9 is a diagram showing a process flow in the case of performing a operation using the touch panel to prioritize a user interface in the embodiment of the present invention.
[Figure 10] Figure 10 is a diagram showing a process flow in the case of performing a operation using the touch panel to display the pop-up menu when the user interface is displayed in the embodiment of the present invention.
[Figure 11] Figure 11 is a block diagram of a disc reproduction apparatus according to an embodiment of the present invention.
[Figure 12] Figure 12 is a diagram showing a process flow in the case of operating a graphics menu in a BD-J mode using a touch panel according to the embodiment of the present invention.

### [Description of Embodiments]

Embodiments of the present invention will be described below with reference to drawings.

### [First embodiment]

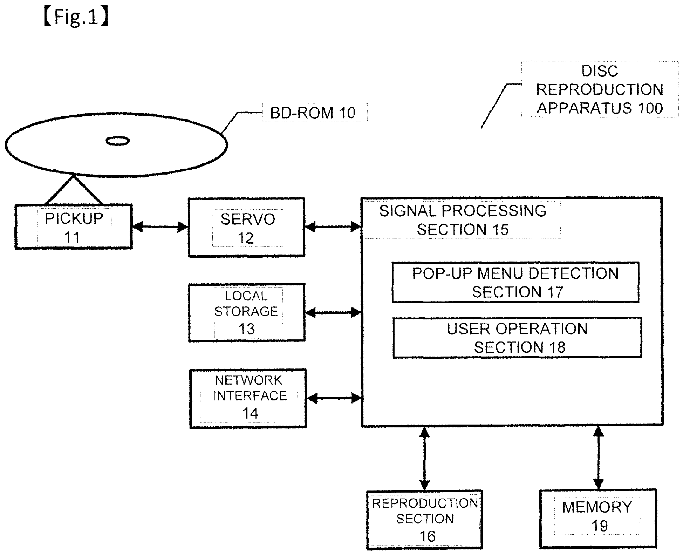

Figure 1 is a block diagram of a disc reproduction apparatus according to an embodiment of the present invention. A disc reproduction apparatus 100 is constituted by a pickup 11 which acquires data from a BD-ROM 10, a servo 12 which controls the pickup 11, a local storage 13, a network interface 14, a signal processing section 15, a reproduction section 16 and a memory 19. The signal processing section 15 includes a pop-up menu detection section 17 and a user operation section 18.

Next, each component will be described.

The BD-ROM 10 is a recording medium in which AV contents such as a movie or a live video are recorded. The BD-ROM 10 is often used for package software to be on the market or for rental, and it is a read-only medium in which data is written during a manufacture process and for which data addition and rewriting is impossible.

The servo 12 is a device which causes the pickup 11 to move (seek) toward the radius direction of a recording medium or adjusts the movement (focusing) of the recording medium toward the axial direction of the recording medium.

The pickup 11 acquires various data from the BD-ROM 10 and sends the data to the signal processing section 15.

Data processed by the signal processing section 15 includes not only the data in the BD-ROM 10 but also data stored in the local storage 13 and data downloaded from a network via the network interface 14.

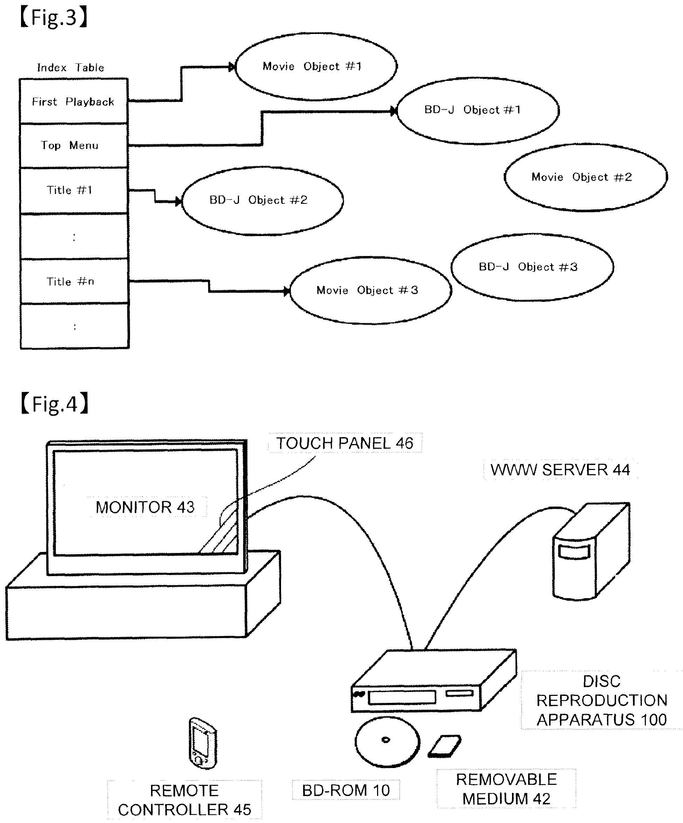

The signal processing section 15 is means for processing these data so that the reproduction section 16 can reproduce AV contents and the like. The signal processing section 15 receives the contents of a user's operation, determines whether the operation is acceptable, and, if acceptable, causes the user operation section 18 to execute the operation. The signal processing section 15 also has a function of displaying a user interface which is originally incorporated in the memory 19 of the disc reproduction apparatus 100 onto a monitor 43 as shown in Figure 4.

A user interface is such that a program is held in the memory 19 to display, on the monitor, a reproduction button or a stop button as functions of the disc reproduction apparatus 100 43 or the like. When a user operates a remote controller 45 or a touch panel 46 as shown in Figure 4, the signal processing section 15 associates the user's operation with the function of a button and causes the user operation section 18 to execute the action of the operated button.

The pop-up menu detection section 17 is included in the signal processing section 15, and it has a function of detecting whether a pop-up menu is displayed or not.

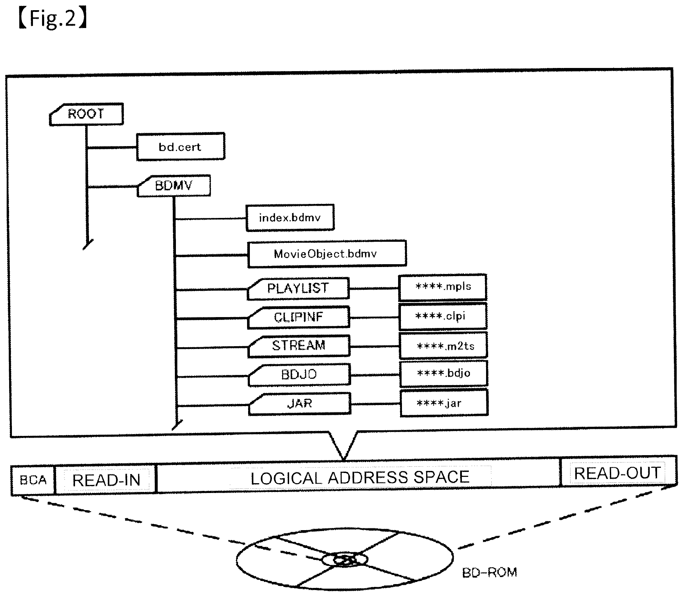

Next, the file configuration of the BD-ROM 10 will be described with the use of Figure 2.

Figure 2 is a diagram showing the configuration of the BD-ROM 10. Similarly to other optical discs, for example, a DVD (Digital Versatile Disc) and a CD (Compact Disc), the BD-ROM 10 has a spiral recording area from its internal circumference toward its external circumference, and has a logical address space where logical data can be recorded, between the read-in area at the internal circumference and the read-out area at the external circumference. Inside the read-in, a special area which is called a BCA (Burst Cutting Area) and which can be read only by a drive. Since this area cannot be read from an application, it is utilized, for example, for copyright protection techniques.

In the logical address space, there is recorded file system information (volume) at the top and, after that, application data such as video data. A file system refers to, for example, UDF or ISO9660. It is possible to read out recorded logical data similarly to a common PC with the use of a directory and a file structure and read out a filename or directory name of 255 characters.

As for a directory and a file structure on the BD-ROM 10, a BDMV directory and a bd.cert file are placed directly under a root directory (ROOT). The BDMV directory is a directory in which data to be handled by the BD-ROM 10, such as AV contents and management information, are recorded. The bd.cert (fixed file name) is a certificate to be used for signature verification at the time of merging contents added for a virtual package with data on the BD-ROM 10.

Under the BDMV directory, there exist five subdirectories called a PLAYLIST directory, a CLIPINF directory, a STREAM directory, a BDJO directory and a JAR directory. In the BDMV directory, there are located two kinds of files, index.bdmv and MovieObject.bdmv.

Here, index.bdmv (fixed file name) will be described in more detail. The index.bdmv is management information about the whole BD-ROM 10 and has information such as an organization ID (32 bits) which is an identifier identifying a provider of a movie and a disc ID (128 bits) which is an identifier assigned to each of the BD-ROM 10 provided by providers. By index.bdmv being read first after the disc is inserted into the disc reproduction apparatus 100, the disc is uniquely recognized by the disc reproduction apparatus 100. In addition, index.bdmv includes a table showing multiple titles which can be reproduced on the BD-ROM 10 and BD-J objects defining the individual titles in association with each other.

Next, a file attached with an extension "bdjo" will be described.

A file attached with the extension "bdjo" is a file storing a BD-J object. The BD-J object is information defining a title by associating an AV stream shown by playlist information with an application. The BD-J object shows an "application management table" and a list of reproducible playlists in the title. The application management table (AMT) is a table realizing "application signaling". The "application signaling" refers to control in charge of managing a title in the BD-ROM 10 as an existence section of an application to activate and terminate the application. Here, the existence section refers to a section during which the application can exist on a heap memory of a virtual machine, on a time axis of the whole contents recorded in the BD-ROM 10. The "existence" refers to such a state that the application has been read out onto the heap memory and is in a state that it can be executed by the virtual machine. The application management table shows an application that exists in this title as the existence section by enumerating the identifier (application ID) of the application and the IDs of Java (registered trademark) archive files belonging to the application. That is, one application is constituted by one or more Java (registered trademark) archive files.

Thus, a Java (registered trademark) application whose sectors are managed by an application management table in a BD-J object is called a "BD-J application".

Figure 3 is a diagram showing the relationships between an index.bdmv file and titles. A title is a reproduction unit in which an application and an AV stream is paired. The constitution of titles on a disc is described in the index.bdmv file to manage reference relationship between each title on the disc and a corresponding application (a BD-J application in the case of a BD-J mode title, and a scenario program in the case of an HDMV mode title). As special titles, "First Playback" and "Top Menu" exist. The "First Playback" is a title which is automatically reproduced first when the BD is activated. They are used mainly for displaying the terms of service of the BD. The "Top Menu" is reproduced when a menu key of a remote controlled is pressed or when reproduction of a title ends, and it is used mainly for selection of a title or for subtitle/voice language selection.

Here, an example of a use form of the disc reproduction apparatus 100 as a system according to this embodiment is shown in Figure 4 and described. For example, the disc reproduction apparatus 100 is system-configured together with the BD-ROM 10, a removable medium 42, the monitor 43, a WWW server 44 and the remote controller 45.

The monitor 43 is a device for displaying reproduced video. It also displays operation menus such as a pop-up menu and a user interface, to the user. Thereby, the user can visually operate the disc reproduction apparatus 100 using the remote controller 45. The touch panel 46 may be attached on the display screen of the monitor 43 so that the user can operate it. At this time, it is possible for the signal processing section 15 to detect positions on the screen where the user has touched the touch panel 46 with a finger and causes the user operation section 18 to execute various user's operations corresponding to buttons of a pop-up menu and a user interface displayed on the positions on the screen.

The remote controller 45 is a device for the user to remotely operate the disc reproduction apparatus 100. By operating buttons on the remote controller 45 or the disc reproduction apparatus 100, the user can perform reproduction of contents recorded in the BD-ROM 10, or the like.

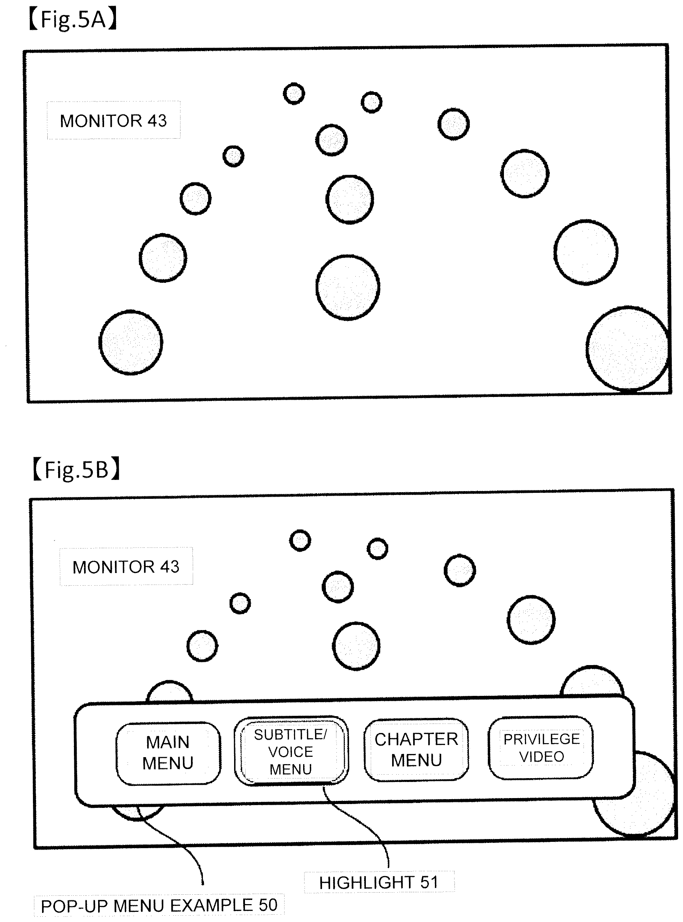

Here, a display example of the pop-up menu will be described with the use of Figures 5A to 5B.

On a reproduction screen where multiple circular objects are depicted, as shown in Figure 5A, the user operates a pop-up menu key with the remote controller or the like. Then, a pop-up menu example 50 is displayed on the screen being reproduced, on the monitor 43 as shown in Figure 5B. In the pop-up menu example 50, buttons for performing a user's operation are prepared, and a selected button is highlighted by a highlight 51.

According to the pop-up menu example 50, main functions which the user can operate include changing of a title being reproduced, language switching between voice and subtitle, changing of a chapter. Functions which the user may want to operate during reproduction can be included.

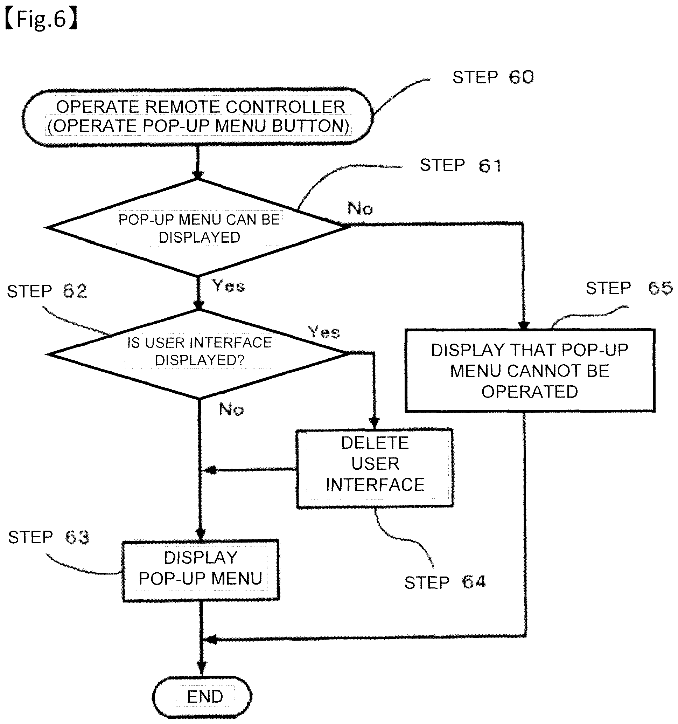

Next, description will be made with the use of Figure 6 on a process performed in the case where the user performs a operation using the remote controller 45 to display a pop-up menu in the HDMV mode or the BD-J mode.

Figure 6 is a diagram showing a process flow in the case of performing a operation using the remote controller in this embodiment. First, at step 60, the user operates a pop-up menu button of the remote controller 45.

At step 61, upon determining that it is possible to display a pop-up menu in the title being reproduced by the reproduction section 16, the signal processing section 15 proceeds to step 62. On the other hand, upon determining that it is not possible to display a pop-up menu in the title being reproduced by the reproduction section 16, the signal processing section 15 displays that it is not possible to perform a pop-up menu operation, on the monitor 43 or the like to notify it to the user (step 65). It is also possible for the signal processing section 15 to ignore a user's operation and invokes no action at step 65.

At step 62, when confirming that a user interface is displayed on the monitor 43, the signal processing section 15 deletes the display of the user interface (step 64). Then, the signal processing section 15 proceeds to step 63. On the other hand, when confirming that a user interface is not displayed on the monitor 43, the signal processing section 15 immediately proceeds to step 63.

At step 63, the signal processing section 15 displays a pop-up menu of the title being reproduced by the reproduction section 16, on the monitor 43 and ends the process.

The procedure for the user to display a pop-up menu using the remote controller 45 has been described. In the case of displaying a user interface, a process can be performed in the above procedure, in which the pop-up menu and the user interface are exchanged.

Thus, any of the pop-up menu and the user interface is displayed on the monitor 43, it is possible to reduce operation errors.

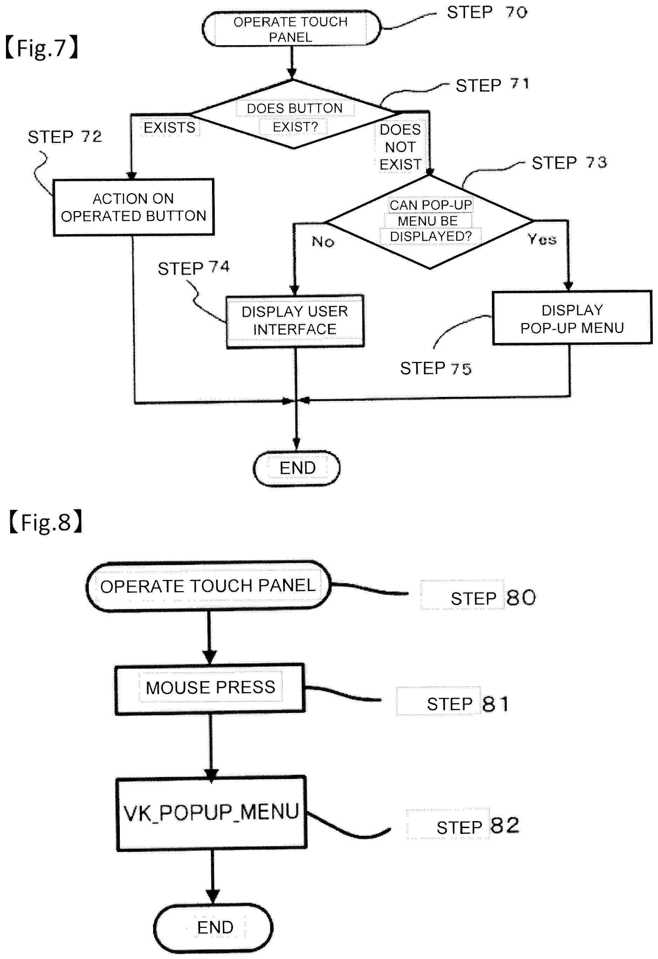

Next, description will be made with the use of Figure 7 on an action invoked when the user touches the touch panel 46 in order to display a pop-up menu in the HDMV mode.

Figure 7 is a diagram showing a process flow in the case of performing a operation using the touch panel in this embodiment. When the user touches the touch panel 46 (step 70), the signal processing section 15 determines whether there is a button at the screen position where the user has performed the operation. Upon determining that a button exists (step 71), the signal processing section 15 proceeds to step 72. The button may be any button for performing a user's operation, including a pop-up menu and a user interface.

At step 72, the signal processing section 15 causes the user operation section 18 to execute the user's operation of the button at the position where the user pressed. If a button does not exist at the position where the user pressed the touch panel 46, it is assumed that the user has touched the touch panel 46 by mistake or pressed a wrong place. In this case, it is desirable that the user's operation is ignored or a user interface is displayed.

Upon determining that there is not a button at step 71, the signal processing section 15 proceeds to step 73.

At step 73, the signal processing section 15 determines whether it is possible to display a pop-up menu in the title being reproduced by the reproduction section 16. If determining that it is not possible to display a pop-up menu, for example, because a pop-up menu does not exist in the title being reproduced, the signal processing section 15 proceeds to step 74. Whether a pop-up menu exists or not is held in management information in a ****.clipi file shown in Figure 2, and the signal processing section 15 can check this information.

At step 74, because it is supposed that the user has touched the touch panel 46 in order to perform some operation, even in the case where it is not possible to display a pop-up menu, the signal processing section 15 may display a user interface on the monitor 43. Since it is conceivable that the user has touched the touch panel 46 by mistake, it is also possible to ignore the user's operation.

On the other hand, if determining that it is possible to display a pop-up menu in the title being reproduced by the reproduction section 16, at step 73, the signal processing section 15 causes a pop-up menu to be displayed on the monitor 43 (step 75).

Thus, in accordance with the sequence in Figure 7, there is also an advantage that, since the user can cause a user interface to be displayed by touching a position where a button does not exist if he wants to execute an action which does not exist in the pop-up menu, the user can continue the operation.

Furthermore, by using the sequence in Figure 7, it is possible to perform a operation in the priority order of a button operation, a pop-up menu and a user interface in response to a touch panel operation by the user, and reduce wrong operations by the user because a pop-up menu and a user interface are not overlappedly displayed.

The procedure for displaying a pop-up menu and a user interface in the HDMV mode has been described above. However, in order to display a pop-up menu by a touch panel operation in a BD-J mode title, a process described with reference to Figure 8 is required.

In a BD-J mode title also, it is possible to display a pop-up menu at step 63 in Figure 6 and step 75 in Figure 7 by the process described below.

As for a pop-up menu in the BD-J mode, when an operation of POPUP_ON by the user is notified to the BD-J application as VK_POPUP_MENU, the BD-J application displays a pop-up menu. This function is provided for most of contents, and the pop-up menu is displayed similarly to a pop-up menu in the HDMV mode when seen from the user.

In order to display this pop-up menu, a mouse event supported by contents is used. A mouse event is to detect a mouse click or a mouse press and invoke an action registered with the BD-J application. A pop-up menu is displayed by the sequence in Figure 8 with the use of this function.

Figure 8 is a diagram showing a process flow in the case of operating the pop-up menu of a BD-J title using the touch panel in this embodiment. Here, description will be made on the assumption that contents are provided with a BD-J application which supports a mouse event and VK_POPUP_MENU.

When detecting a touch panel operation by the user (step 80), the signal processing section 15 issues a mouse press to the BD-J application (step 81).

At step 82, VK_POPUP_MENU is issued to the BD-J application.

Whether a mouse press event registered with the BD-J application exists or not can be added to the determination at step 61 in Figure 6 and step 73 in Figure 7 about whether it is possible to display a pop-up menu or not. When there is a registered mouse press event, it is determined that the BD-J application will need some different action and VK_POPUP_MENU of step 82 is not issued. When there is not a registered mouse press event, VK_POPUP_MENU is issued to the BD-J application by a touch panel operation (step 82). Thereby, it does not happen that the mouse press event registered with the BD-J application is executed by mistake in the processing at step 63 in Figure 6 and step 75 in Figure 7.

As described above, according to the above-stated disc reproduction apparatus of the first embodiment of the present invention, it is possible to reduce operation mistakes because any of a pop-up menu and a user interface specific to HDMV mode and BD-J mode titles is displayed on a screen.

### [Second embodiment]

Description will be made below on a second embodiment of the disc reproduction apparatus according to the present invention with reference to drawings. Description of parts similar to those in the first embodiment which have been already described will be omitted.

The configuration of the disc reproduction apparatus of this embodiment is as shown in the block diagram of Figure 1, and the action details, process flow and the like of each component are as already described with reference to Figures 2 to 7. Therefore, overlapping description will be omitted.

Description will be made below on a process flow in the case of reversing the priority order of a pop-up menu and a user interface, with regard to the action invoked when the user touches the touch panel 46.

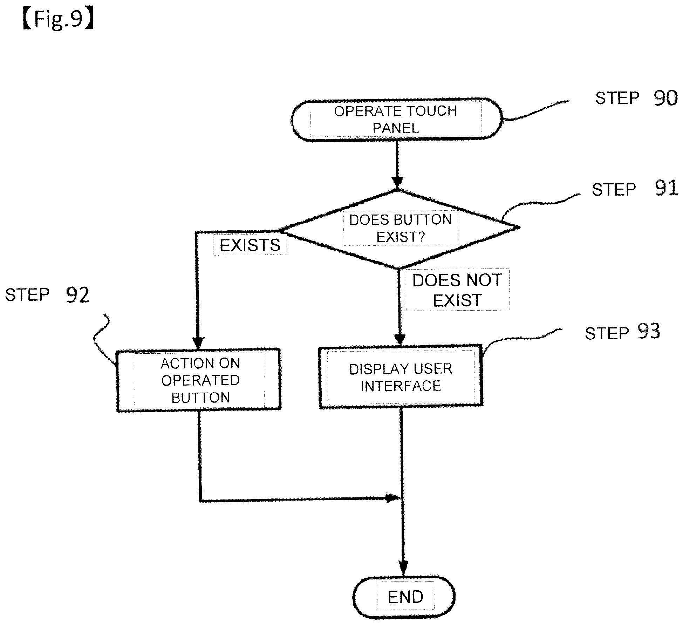

Figure 9 is a diagram showing a process flow in the case of performing a operation using the touch panel to prioritize a user interface in this embodiment.

When the user touches the touch panel 46 (step 90), the signal processing section 15 determines whether there is a button at the screen position where the user has performed the operation. Upon determining that a button exists (step 91), the signal processing section 15 proceeds to step 92. The button may be any button for performing a user's operation, including a pop-up menu and a user interface.

At step 92, the signal processing section 15 causes the user operation section 18 to execute the user's operation of the button at the position where the user pressed. If a button of a pop-up menu or a user interface does not exist at the position where the user pressed the touch panel 46, it is assumed that the user has touched the touch panel 46 by mistake or pressed a wrong place. In this case also, similarly to the description of Figure 7, the operation may be ignored, or it may be notified via a user interface that the operation is ineffective.

Upon determining at step 91 that there is not a button at the position on the screen where the user performed the operation, the signal processing section 15 proceeds to step 93.

At step 93, the signal processing section 15 displays a user interface on the monitor 43.

In the process shown in Figure 9, a user interface is displayed on the monitor 43. However, the case is also conceivable where the user wants to operate a pop-up menu.

If there is a button for displaying a pop-up menu on the user interface displayed on the monitor 43, the signal processing section 15 can display a pop-up menu on the monitor 43 by operating the button.

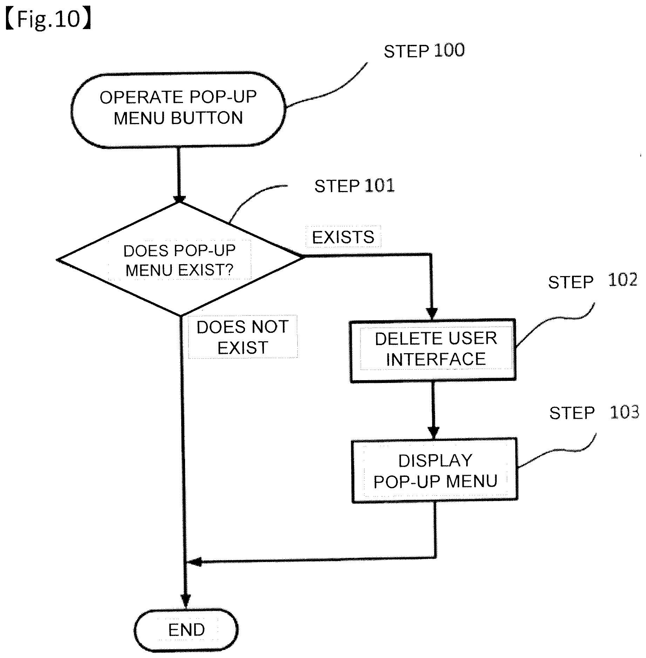

A process for displaying a pop-up menu on the monitor 43 in such a case will be described with the use of Figure 10.

Figure 10 is a diagram showing a process flow in the case of performing a operation using the touch panel in the embodiment of the invention to display a pop-up menu when a user interface is displayed.

When the user operates a button for displaying a pop-up menu, which exists on the user interface (step 100), the flow proceeds to step 101.

At step 101, the signal processing section 15 determines whether it is possible to display a pop-up menu in the title being reproduced. When the signal processing section 15 determines at step 101 that it is not possible to display a pop-up menu in the title being reproduced, it is preferable that the request to display a pop-up menu is ignored or that a warning to the effect that it is not possible to display a pop-up menu is issued with the use of a user interface.

Upon determining at step 101 that it is possible to display a pop-up menu in the title being reproduced, the signal processing section 15 first deletes the user interface (step 102). This is because, if a pop-up menu is displayed in a state that the user interface is displayed, the user interface and the pop-up menu may be overlappedly displayed.

At step 103, the signal processing section 15 displays a pop-up menu on the monitor 43.

By the sequences shown in Figures 9 and 10, the priority order of a user interface and a pop-up menu can be reversed, contrary to the sequence shown in Figure 7.

The procedure for displaying a pop-up menu and a user interface in the HDMV mode has been described above. In order to display a pop-up menu by a touch panel operation in a BD-J mode title, the process described with reference to Figure 8 can be performed. The process will be described with reference to Figure 8 for confirmation.

In a BD-J mode title also, it is possible to display a pop-up menu at step 63 in Figure 6, step 75 in Figure 7 and step 103 in Figure 10 by the process described below.

As for a pop-up menu in the BD-J mode, when a operation of POPUP_ON by the user is notified to the BD-J application as VK_POPUP_MENU, the BD-J application displays a pop-up menu. This function is provided for most of contents, and a pop-up menu is displayed similarly to a pop-up menu in the HDMV mode when seen from the user.

In order to display this pop-up menu, a mouse event supported by contents is used. A mouse event is to detect a mouse click or a mouse press and invoke an action registered with the BD-J application.

A pop-up menu is displayed by the sequence in Figure 8 with the use of this function. Here, description will be made on the assumption that contents are provided with a BD-J application which supports a mouse event and VK_POPUP_MENU.

When detecting a touch panel operation by the user (step 80), the signal processing section 15 issues a mouse press to the BD-J application (step 81).

At step 82, VK_POPUP_MENU is issued to the BD-J application.

Whether a mouse press event registered with the BD-J application exists or not can be added to the determination at step 61 in Figure 6, step 73 in Figure 7 and step 101 in Figure 10 about whether it is possible to display a pop-up menu or not. When there is a registered mouse press event, it is determined that the BD-J application will need some different action and VK_POPUP_MENU of step 82 is not issued. When there is not a registered mouse press event, VK_POPUP_MENU is issued to the BD-J application by a touch panel operation (step 82). Thereby, it does not happen that the mouse press event registered with the BD-J application is executed by mistake in the processing at step 63 in Figure 6, step 75 in Figure 7 and step 103 in Figure 10.

According to the above-stated disc reproduction apparatus of the second embodiment of the present invention, it is possible to, even when the user performs a operation via the touch panel during reproduction of an HDMV mode or BD-J mode title, realize the pop-up menu and user interface functions without especially preparing pop-up menu and user interface operation buttons.

### [Third example]

Description will be made below on a third example of the disc reproduction apparatus with reference to drawings.
Description of parts similar to those in the first and second embodiments which have been already described will be omitted.

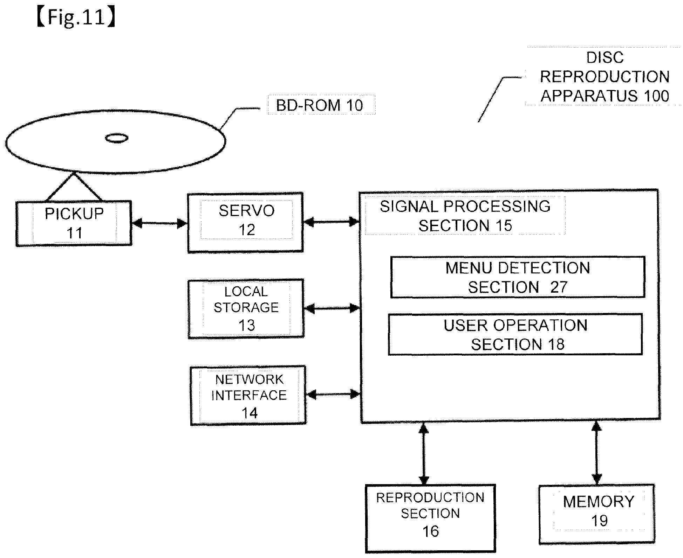

Figure 11 is a block diagram of a disc reproduction apparatus according to this example. This configuration is different from the configuration shown in Figure 1 in that, though the detection section provided for the signal processing section 15 shown in Figure 1 is the pop-up menu detection section 17, the detection section provided for the signal processing section 15 shown in Figure 11 is a menu detection section 27. This menu detection section 27 has a function of detecting whether or not a pop-up menu or a graphics menu is displayed. The action details, process flow and the like of each of the other components are as already described with reference to Figures 2 to 7. Therefore, overlapping description will be omitted.

Description will be made below on an action invoked when the user touches the touch panel 46 in order to display a graphics menu in the BD-J mode.

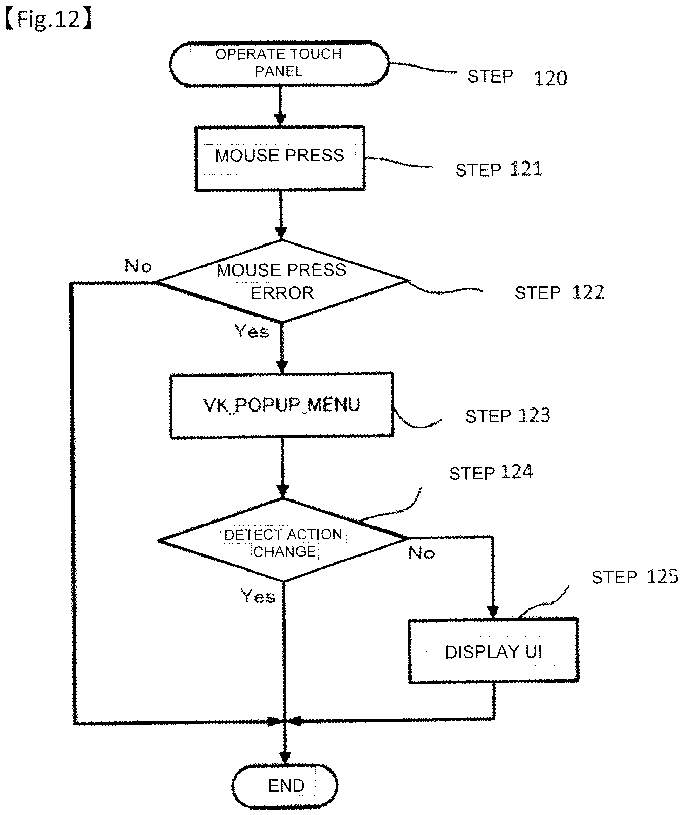

Figure 12 is a diagram showing a process flow in the case of operating a graphics menu in the BD-J mode using the touch panel.

As for a graphics menu in the BD-J mode, when an operation of POPUP_ON by the user is notified to the BD-J application as VK_POPUP_MENU, the BD-J application displays a graphics menu. This function is provided for most of contents, and the graphics menu is displayed similarly to a pop-up menu in HDMV mode when seen from the user.

In order to display this graphics menu, a mouse event supported by contents is used. A mouse event is to detect a mouse click or a mouse press and invoke an action registered with the BD-J application.

A graphics menu is displayed by the sequence shown in Figure 12 with the use of this function. Here, description will be made on the assumption that contents are provided with a BD-J application which supports a mouse event and VK_POPUP_MENU

When detecting a touch panel operation by the user (step 120), the signal processing section 15 issues a mouse press to the BD-J application (step 121).

At step 112, when there is not a registered mouse press event with the BD-J application, the BD-J application notifies an error to the signal processing section 15. Then, the signal processing section 15 determines that there is not a registered mouse press event and proceeds to step 123.

At step 113, the signal processing section 15 issues VK_POPUP_MENU to the BD-J application.

On the other hand, if there is a registered mouse press event with the BD-J application at step 122, an error is not notified to the signal processing section 15. In this case, the BD-J application executes the registered event, and the process ends. Since it is also conceivable that the event is such that does not execute anything, a button for displaying a user interface may be provided, or a user interface may be displayed when a particular position is pressed within the touch panel area.

At step 124, the menu detection section 27 determines whether a graphics menu is displayed or not.

When the menu detection section 27 detects any of the action changes (1) to (3), it is determined that a graphic menu is displayed by the BD-J application.
(1) Some graphics is displayed.
(2) Interactive audio is reproduced.
(3) The scaling of a video being reproduced changes.

If the menu detection section 27 does not detect these changes, the flow proceeds to step 125 on the assumption that the graphic menu has not been displayed.

Detailed description will be made on (1) to (3).

Three areas are prepared as depiction areas: a video plane which is a video reproduction screen, a presentation plane used for subtitles, and an interactive plane. Therefore, if receiving an instruction to draw some graphics in the interactive plane, from the BD-J application, the menu detection section 27 can determine that a pop-up menu has been displayed.
(2) Interactive audio is audio information registered with a sound.bdmv file in the AUXDATA folder shown in Figure 2, which is audio reproduced as sound effects when a pop-up menu is displayed, separately from voice. Therefore, if being instructed to reproduce the audio information registered with a sound.bdmv file, from the BD-J application, the menu detection section 27 can determine that a pop-up menu has been displayed.
(3) There is a form in which a pop-up menu is displayed on the whole screen, and video being reproduced is displayed in a reduced size in the form of being embedded in the pop-up menu. If receiving an instruction to change in the scaling of the video being reproduced, from the BD-J application, the menu detection section 27 can determine that a pop-up menu has been displayed.

At step 125, the signal processing section 15 displays a user interface so that the user can perform some operation.

According to the above-stated disc reproduction apparatus according to the third example, it is possible to operate the touch panel in the priority order of operation of a button, display of a graphics menu and a user interface, even in a BD-J title. Thus, the user can operate a pop-up menu and a graphic menu similarly, without differentiating the HDMV mode and the BD-J mode.

The disc reproduction apparatus according to the present invention is useful as a disc reproduction apparatus for reproducing data recorded in a recording medium such as a BD-ROM disc.

### [Reference Signs List]

- 10: BD-ROM
- 11: pickup
- 12: servo
- 13: local storage
- 14: network interface
- 15: signal processing section
- 16: reproduction section
- 17: pop-up menu detection section
- 18: user operation section
- 19: memory
- 27: menu detection section
- 42: removable medium
- 43: monitor
- 44: WWW server
- 45: remote controller
- 46: touch panel
- 100: disc reproduction apparatus

## Claims

1. A disc reproduction apparatus (100) reproducing a disc in which a title of an HDMV mode or a BD-J mode is held, the disc reproduction apparatus (100) comprising:
a reproduction section (16) reproducing the title;
a memory (19) holding a program for a user interface to be displayed on a monitor (43) for accepting a user's operation, the monitor (43) being for displaying a reproduction screen of the title reproduced by the reproduction section (16) and being connected to the disc reproduction apparatus (100);
**characterized by**
a signal processing section (15) adapted to accept a user's operation onto a touch panel (46) integrated with the monitor (43) and to display, on the monitor (43), the user interface and a pop-up menu specific to a title being reproduced by the reproduction section (16); wherein
when the touch panel (46) is touched by a user at a position where a button for accepting a user's operation exists, the operation corresponding to the touched button is executed; and
when the touch panel (46) is touched by a user at a position where a button for accepting a user's operation does not exist, the user interface is displayed on the monitor (43).

2. The disc reproduction apparatus according to claim 1, wherein a button for displaying a pop-up menu is included in the user interface, and if the signal processing section (15) determines that the button for displaying a pop-up menu is touched, the pop-up menu is displayed on the monitor (43).

## Patentansprüche

1. Scheibenwiedergabevorrichtung (100), die eine Scheibe wiedergibt, in der ein Titel eines HDMV-Modus oder eines BD-J-Modus enthalten ist, wobei die Scheibenwiedergabevorrichtung (100) aufweist:
einen Wiedergabeabschnitt (16), der den Titel wiedergibt,
einen Speicher (19), der ein Programm für eine Benutzerschnittstelle enthält, die zur Entgegennahme einer Benutzerbedienaktivität auf einem Monitor (43) anzuzeigen ist, wobei der Monitor (43) zur Anzeige eines Wiedergabebildschirms des Titels, der von dem Wiedergabeabschnitt (16) wiedergegeben wird, dient und mit der Scheibenwiedergabevorrichtung (100) verbunden ist;
**gekennzeichnet durch**
einen Signalverarbeitungsabschnitt (15), der ausgebildet ist, eine Bedienaktivität eines Benutzers auf einem berührungsempfindlichen Feld (46), das in dem Monitor (43) integriert ist, anzunehmen und auf dem Monitor (43) die Benutzerschnittstelle und ein Aufklappmenü anzuzeigen, das speziell für einen Titel ist, der von dem Wiedergabeabschnitt (16) wiedergegeben wird; wobei
wenn das berührungsempfindliche Feld (46) von einem Benutzer an einer Stelle berührt wird, an der ein Knopf für das Annehmen einer Bedienaktivität des Benutzers vorhanden ist, die Aktivität entsprechend dem berührten Knopf umgesetzt wird; und
wenn das berührungsempfindliche Feld (46) von dem Benutzer an einer Stelle berührt wird, an der ein Knopf für das Annehmen einer Bedienaktivität des Benutzers nicht vorhanden ist, die Benutzerschnittstelle auf dem Monitor (43) angezeigt wird.

2. Scheibenwiedergabevorrichtung nach Anspruch 1, wobei ein Knopf zum Anzeigen eines Aufklappmenüs in der Benutzerschnittstelle enthalten ist, und wenn der Signalverarbeitungsabschnitt (15) ermittelt, dass der Knopf zum Anzeigen eines Aufklappmenüs berührt wird, das Aufklappmenü auf dem Monitor (43) angezeigt wird.

## Revendications

1. Appareil de reproduction de disque (100) permettant de reproduire un disque dans lequel un titre d'un mode HDMV ou d'un mode BD-J est maintenu, l'appareil de reproduction de disque (100) comprenant:
une section de reproduction (16) reproduisant le titre;
une mémoire (19) contenant un programme pour une interface utilisateur à afficher sur un moniteur (43) pour accepter une opération d'utilisateur, le moniteur (43) servant à afficher un écran de reproduction du titre reproduit par la section de reproduction (16) et être connecté à l'appareil de reproduction de disque (100);
**caractérisé par**
une section de traitement de signal (15) conçue pour accepter une opération de l'utilisateur sur un écran tactile (46) intégré au moniteur (43) et pour afficher, au moniteur (43), l'interface utilisateur et un menu contextuel spécifique à un titre reproduit par la section de reproduction (16); dans lequel lorsque l'utilisateur touche l'écran tactile (46) à un endroit où se trouve un bouton permettant d'accepter une opération de l'utilisateur, l'opération correspondant au bouton actionné est exécutée; et
lorsque l'utilisateur touche l'écran tactile (46) à un endroit où il n'y a pas de bouton permettant d'accepter une opération de l'utilisateur, l'interface utilisateur est affichée au moniteur (43).

2. Appareil de reproduction de disque selon la revendication 1, dans lequel un bouton pour afficher un menu contextuel est inclus dans l'interface utilisateur, et si la section de traitement de signal (15) détermine que le bouton permettant d'afficher un menu contextuel est actionné, le menu contextuel est affiché au moniteur (43).
